(19) Europäisches Patentamt
European Patent Office
Office européen des brevets

(11) EP 4 683 173 A1

(12) **EUROPEAN PATENT APPLICATION**
published in accordance with Art. 153(4) EPC

(43) Date of publication:
21.01.2026 Bulletin 2026/04

(51) International Patent Classification (IPC):
H02K 1/18 (2006.01)     H02K 1/02 (2006.01)
H02K 15/02 (2025.01)

(21) Application number: 24770723.5

(22) Date of filing: 07.03.2024

(52) Cooperative Patent Classification (CPC):
H02K 1/02; H02K 1/18; H02K 15/02

(86) International application number:
PCT/JP2024/008836

(87) International publication number:
WO 2024/190617 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.03.2023 JP 2023040773

(71) Applicant: NIPPON STEEL CORPORATION
Chiyoda-ku
Tokyo 100-8071 (JP)

(72) Inventors:
• HIRAYAMA, Ryu
Tokyo 100-8071 (JP)
• SATO, Shinya
Tokyo 100-8071 (JP)

(74) Representative: Vossius & Partner
Patentanwälte Rechtsanwälte mbB
Siebertstrasse 3
81675 München (DE)

(54) **LAMINATED CORE, ROTATING MACHINE, AND MANUFACTURING METHOD FOR LAMINATED CORE**

(57) A laminated core includes a plurality of annular thin pieces being stacked in the thickness direction thereof and including an Fe-based amorphous alloy having an amorphous microstructure, and has a ratio ($W\theta/Wr$) of less than 1.0, the ratio ($W\theta/Wr$ being the iron loss $W\theta$ in the circumferential direction of the thin pieces to the iron loss $Wr$ in the radial direction orthogonal to the circumferential direction and the thickness direction.

FIG. 4

EP 4 683 173 A1

**Description**

TECHNICAL FIELD

The present invention relates to a laminated core, a rotating machine, and a method for manufacturing a laminated core.

Priority is claimed on Japanese Patent Application No. 2023-040773, filed March 15, 2023, the content of which is incorporated herein by reference.

BACKGROUND ART

Electric vehicles have recently attracted attention, leading to active development of rotating machines that serve as driving sources of electric vehicles. A rotating machine for an electric vehicle is required to exhibit high efficiency in a wide rotation speed range and/or a wide torque range in order to obtain an appropriate output according to various driving situations.

A stator core in which an amorphous alloy is used has been conventionally proposed (see, for example, Patent Documents 1 to 4). Patent Documents 3 to 4 also propose a method of magnetic field annealing of a stator core in which an amorphous alloy is used. Specifically, Patent Document 3 describes an apparatus for magnetic field annealing of a wound core formed by winding a sheet of an amorphous alloy (amorphous alloy). Patent Document 4 describes a method of magnetic field annealing of an amorphous alloy ribbon including a high-permeability amorphous alloy applicable to a core of a transformer or a motor at the crystallization temperature or less.

Citation List

Patent Document

Patent Document 1: PCT International Publication No. WO 2020/044745
Patent Document 2: Japanese Patent No. 6656429
Patent Document 3: Japanese Unexamined Patent Application, First Publication No. H5-21774
Patent Document 4: Japanese Unexamined Patent Application, First Publication No. H3-10052

SUMMARY OF INVENTION

Technical Problem

However, the apparatus described in Patent Document 3 does not relate to a laminated core. Patent Document 4 merely suggests application of an amorphous alloy ribbon annealed in a magnetic field to a motor core, and does not specifically disclose magnetic field annealing of a laminated core.

A laminated core has a circular core back and a plurality of teeth formed so as to protrude inward from the core back, and the direction in which the magnetic flux flows in the plane of the laminated core is different between the core back and the teeth. Therefore, even if the techniques disclosed in Patent Documents 3 to 4 are applied, an effect of reducing iron loss may not be sufficiently obtained in magnetic field annealing of a laminated core including an amorphous alloy thin strip.

The present invention has been made in view of the above circumstances, and an object thereof is to provide a laminated core of an amorphous alloy thin strip in which the iron loss is further reduced, a rotating machine including a laminated core in which the iron loss is further reduced, and a method for manufacturing a laminated core.

Solution to Problem

In order to solve the above problem, the present invention adopts the following configurations.

[1] A laminated core according to one aspect of the present invention includes a plurality of annular thin pieces including an Fe-based amorphous alloy having an amorphous microstructure, the plurality of annular thin pieces are stacked in a thickness direction of the plurality of annular thin pieces, and a ratio ($W_\theta/W_r$) of an iron loss $W_\theta$ in a circumferential direction $\theta$ of the plurality of annular thin pieces to an iron loss $W_r$ in a radial direction orthogonal to the circumferential direction $\theta$ and the thickness direction is less than 1.0.

[2] The laminated core described in [1] above may include an annular core back portion and a plurality of tooth portions

2

that protrude from the annular core back portion in the radial direction and are disposed at an interval in the circumferential direction θ, and a ratio (Wθ/Wr) of the iron loss Wθ to the iron loss Wr in the annular core back portion is less than 1.0.

[3] In the laminated core described in [1] above, the entire microstructure of the Fe-based amorphous alloy may include an amorphous microstructure and may not include a crystalline microstructure.

[4] In the laminated core described in [1] above, each of the plurality of annular thin pieces may have a surface on which an oxide layer is formed.

[5] The laminated core described in [1] above may include an adhesion layer between the plurality of annular thin pieces.

[6] The laminated core described in [2] wherein the annular core back portion between adjacent tooth portions among the plurality of tooth portions may have at least one magnetic domain having a magnetic domain width of 0.3 mm or more and 3.0 mm or less, and an angle being formed by a magnetic domain wall and a tangent of the circumferential direction θ of less than 10°.

[7] In the laminated core described in [2] above, the annular core back portion between adjacent tooth portions among the plurality of tooth portions may have an area percentage of a magnetic domain of 50% or more, and the magnetic domain has a magnetic domain width of 0.3 mm or more and 3.0 mm or less and an angle formed by a magnetic domain wall and a tangent of the circumferential direction θ of less than 10°.

[8] A rotating machine according to one aspect of the present invention includes the laminated core described in any one of [1] to [7] above.

[9] A method for manufacturing a laminated core according to one aspect of the present invention includes an magnetic field annealing step of performing annealing of a laminated body in a magnetic field, the laminated body includes a plurality of annular thin pieces including an Fe-based amorphous alloy, the plurality of annular thin pieces are stacked along a thickness direction thereof, and in the magnetic field annealing step, the annealing is performed at an annealing temperature of less than a Curie point Tc (°C) of the Fe-based amorphous alloy and (Tc - 100) °C or more in a state where a magnetic field is applied in a circumferential direction θ of the laminated body.

[10] In the method for manufacturing a laminated core described in [9] above, the annealing temperature in the magnetic field annealing step may be in a range of (Tc - 20) °C or less and (Tc - 90) °C or more.

[11] In the method for manufacturing a laminated core described in [9] above, the annealing temperature in the magnetic field annealing step may be in a range of (Tc - 40) °C or less and (Tc - 70) °C or more.

[12] In the method for manufacturing a laminated core described in [9] above, a magnetic field strength for application of the magnetic field to the laminated body may be in a range of 100 to 10000 A/m inside the laminated body.

[13] In the method for manufacturing a laminated core described in [9] above, a magnetic field strength for application of the magnetic field to the laminated body may be in a range of 400 to 7500 A/m inside the laminated body.

[14] In the method for manufacturing a laminated core described in [9] above, the magnetic field annealing step may include:

a first step of applying the magnetic field to the laminated body along the circumferential direction θ;
a second step of heating the laminated body to which the magnetic field is applied to the annealing temperature;
a third step of holding the laminated body to which the magnetic field is applied at the annealing temperature for 1 to 8 hours to anneal the laminated body;
a fourth step of cooling the laminated body to which the magnetic field is applied to 200°C or less; and
a fifth step of stopping application of the magnetic field to the laminated body after the fourth step.

[15] In the method for manufacturing a laminated core described in [14] above, in the second step, an average heating rate may be 1 to 10 °C/min.

Advantageous Effects of Invention

According to the present invention, it is possible to provide a laminated core of an amorphous alloy thin strip in which the iron loss is further reduced, a rotating machine including a laminated core in which the iron loss is further reduced, and a method for manufacturing a laminated core.

BRIEF DESCRIPTION OF DRAWINGS

[FIG. 1] FIG. 1 is a schematic sectional view showing an example of a rotating machine according to the present embodiment.

[FIG. 2] FIG. 2 is a schematic plan view showing an example of a stator core (laminated core) included in a rotating machine according to the present embodiment.

[FIG. 3] FIG. 3 is a schematic sectional view showing an example of a stator core (laminated core) included in a rotating machine according to the present embodiment.

[FIG. 4] FIG. 4 is a schematic plan view illustrating an example of magnetic field annealing of a stator core (laminated core) included in a rotating machine according to the present embodiment.

[FIG. 5] FIG. 5 is a schematic plan view illustrating another example of magnetic field annealing of a stator core (laminated core) included in a rotating machine according to the present embodiment.

[FIG. 6] FIG. 6 is a schematic plan view illustrating another example of magnetic field annealing of a stator core (laminated core) included in a rotating machine according to the present embodiment.

[FIG. 7] FIG. 7 is a graph showing a loss of a rotating machine according to the present embodiment.

[FIG. 8] FIG. 8 is a graph showing a relationship between the iron loss of a wound core including an Fe-based amorphous alloy and the holding temperature of magnetic field annealing.

[FIG. 9] FIG. 9 is a graph showing an effect of improving magnetic properties in a case where a thin strip of an Fe-based amorphous alloy is subjected to magnetic field annealing.

[FIG. 10] FIG. 10 is a schematic view illustrating a position at which a test piece for measurement of magnetic properties is cut out.

[FIG. 11] FIG. 11 is a schematic perspective view showing an example in which a wound core is applied to a stator core of a rotating machine.

[FIG. 12A] FIG. 12A is a schematic perspective view showing another example in which a wound core is applied to a stator core of a rotating machine.

[FIG. 12B] FIG. 12B is a partially enlarged view of FIG. 12A.

[FIG. 13] FIG. 13 is an example of an image obtained by Kerr effect microscopy of a region of 10 mm in length $\times$ 10 mm in width on a surface of a sample collected from a stator core (laminated core) included in a rotating machine according to the present embodiment.

DESCRIPTION OF EMBODIMENTS

A laminated core, a rotating machine including a laminated core, and a method for manufacturing a laminated core according to embodiments of the present invention will be described with reference to the drawings.

In the following description, the rotating machine will be described using an electric motor as an example, specifically, an AC electric motor, more specifically, a synchronous electric motor, and still more specifically, a permanent magnet field type electric motor. This type of electric motor is suitably adopted in, for example, an electric vehicle.

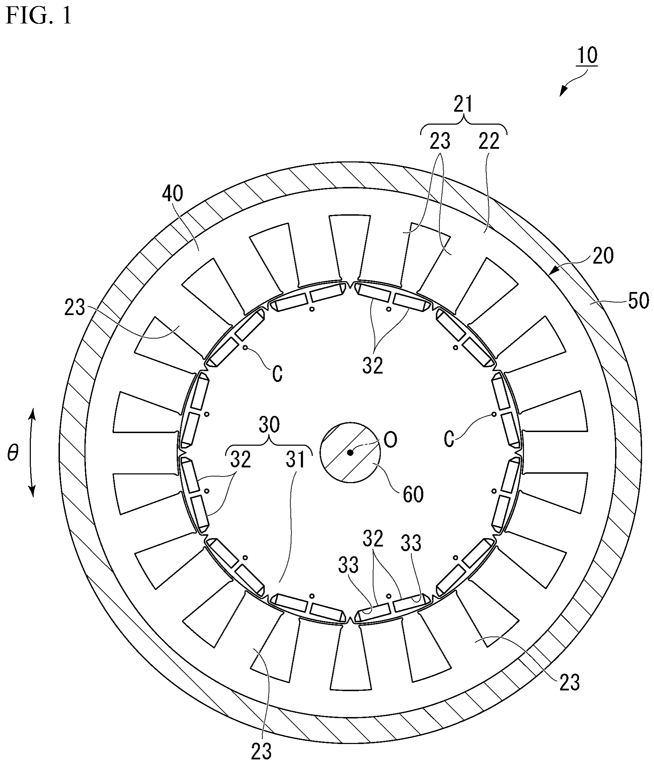

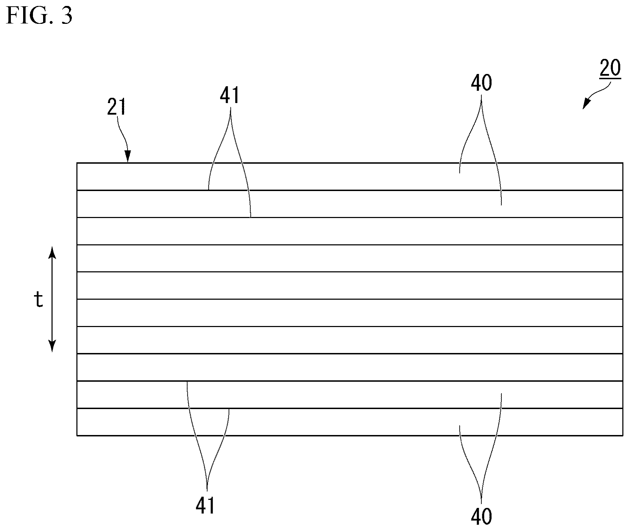

As shown in FIGS. 1 to 3, a rotating machine 10 of the present embodiment includes a stator 20, a rotor 30, a case 50, and a rotary shaft 60. The stator 20 and the rotor 30 are housed in the case 50. The stator 20 is fixed to the case 50.

In the present embodiment, as the rotating machine 10, an inner rotor type machine is adopted in which the rotor 30 is positioned inside the stator 20. However, as the rotating machine 10, an outer rotor type machine may be adopted in which the rotor 30 is positioned outside the stator 20. The rotating machine 10 of the present embodiment is a three-phase AC motor having 12 poles and 18 slots. However, appropriate changes can be made in, for example, the number of poles, the number of slots, and the number of phases.

The stator 20 includes a stator core 21 as an example of the laminated core of the present embodiment, and includes a winding (not illustrated).

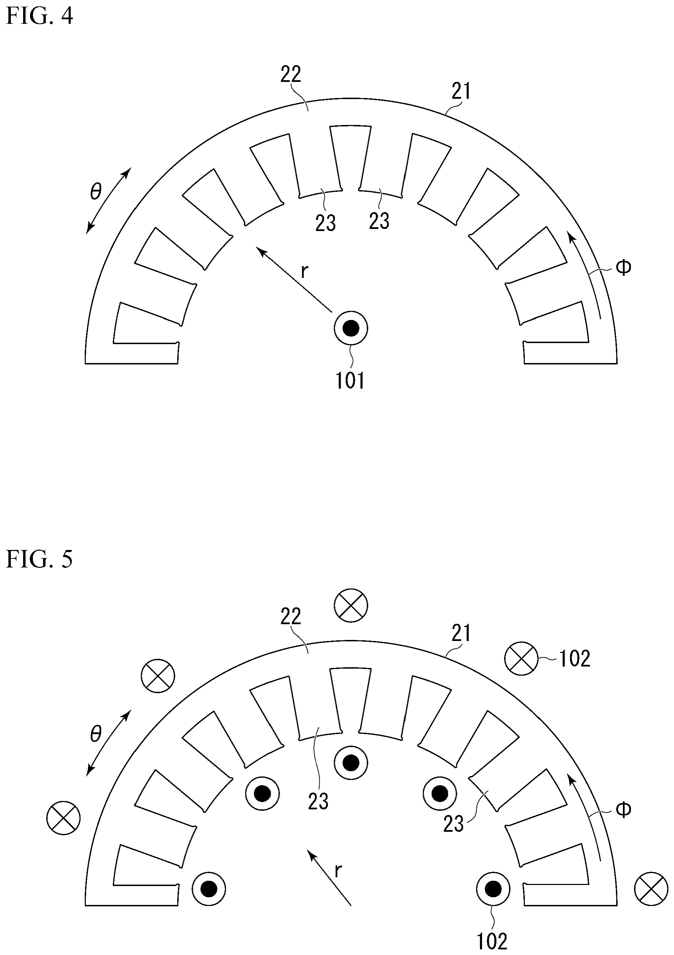

As shown in FIG. 4, the stator core 21 includes thin pieces 40 including an Fe-based amorphous alloy that are stacked in the thickness direction thereof. The stator core 21 includes an annular core back portion 22 and a plurality of tooth portions 23. Hereinafter, the axial direction of the stator core 21 (core back portion 22), that is, the central axis O direction of the stator core 21 is referred to as the axial direction t. The radial direction of the stator core 21 (core back portion 22), that is, the direction orthogonal to the central axis O of the stator core 21 is referred to as the radial direction r. The circumferential direction of the stator core 21 (core back portion 22), that is, the direction that circles the central axis O of the stator core 21 is referred to as the circumferential direction θ.

The core back portion 22 is formed in a circular shape in plane view in which the stator 20 is viewed from the axial direction t.

The plurality of tooth portions 23 protrude from the core back portion 22 inward in the radial direction r. Specifically, the plurality of tooth portions 23 protrude toward the central axis O of the core back portion 22 along the radial direction r. The plurality of tooth portions 23 are disposed at equal intervals in the circumferential direction θ. In the present embodiment, 18 tooth portions 23 are disposed every 20 degrees of the central angle about the central axis O. The plurality of tooth portions 23 are formed in equal shape and size.

The winding is wound around the tooth portions 23. The winding may be wound in a concentrated or distributed manner.

The rotor 30 is disposed inside the stator 20 (stator core 21) in the radial direction r. The rotor 30 includes a rotor core 31 and a plurality of permanent magnets 32.

The rotor core 31 is formed in an annular shape (circular shape) disposed coaxially with the stator 20. The rotary shaft 60 is disposed in the rotor core 31. The rotary shaft 60 is fixed to the rotor core 31. The rotor core 31 is an Ferromagnetic body. The rotor core 31 may be obtained by, for example, stacking a plurality of steel pieces cut out from an electrical steel sheet, in the thickness direction of the steel pieces. The rotor core 31 may be obtained by stacking a plurality of thin pieces cut out from a thin strip of an Fe-based amorphous alloy, in the thickness direction thereof.

The plurality of permanent magnets 32 are fixed to the rotor core 31. In the present embodiment, one set of two permanent magnets 32 forms one magnetic pole. A plurality of sets of permanent magnets 32 are disposed at equal intervals in the circumferential direction θ. In the present embodiment, 12 sets (24 in total) of permanent magnets 32 are disposed every 30 degrees of the central angle about the central axis O.

In the present embodiment, an embedded magnet type motor is adopted as a permanent magnet field type electric motor.

A plurality of through-holes 33 penetrating the rotor core 31 in the axial direction t are formed in the rotor core 31. The plurality of through-holes 33 are disposed corresponding to the plurality of permanent magnets 32. Each permanent magnet 32 is fixed to the rotor core 31 in a state of being disposed in the corresponding through-hole 33.

Each permanent magnet 32 can be fixed to the rotor core 31, for example, by bonding an outer surface of the permanent magnet 32 to an inner surface of the through-hole 33 with an adhesive. As the permanent magnet field type electric motor, a surface magnet type motor may be adopted instead of the embedded magnet type motor.

Each of the stator core 21 and the rotor core 31 has a laminate thickness of, for example, 30 mm.

The stator core 21 has an outer diameter of, for example, 150 mm. The stator core 21 has an inner diameter of, for example, 100 mm. The rotor core 31 has an outer diameter of, for example, 98.4 mm. Note that these values are merely examples, and the laminate thickness, the outer diameter, and the inner diameter of the stator core 21 and the laminate thickness and the outer diameter of the rotor core 31 are not limited to these values. The base of the inner diameter of the stator core 21 is the tip portion of the tooth portions 23 in the stator core 21. The inner diameter of the stator core 21 is the diameter of an imaginary circle inscribed in the tip portions of all of the tooth portions 23.

The thin pieces 40 including an Fe-based amorphous alloy constituting the laminated core of the present embodiment are formed by, for example, punching, cutting, wire electric discharge machining, or the like of an Fe-based amorphous alloy thin strip that serves as a base metal. The plurality of thin pieces 40 may be formed at a time by stacking a plurality of Fe-based amorphous alloy thin strips not subjected to forming work and then processing the stacked thin strips into a predetermined shape by wire electric discharge machining.

The Fe-based amorphous alloy may contain, for example, 70 mass% or more of Fe, and may further contain one or more among Si, P, B, and C. The Fe-based amorphous alloy may contain, in addition to the above elements, one or more among Al, Ge, Se, W, Mo, V, Nb, Ta, Ti, Hf, Mn, and Cu. Fe may be partially substituted with Co or Ni. It is preferable that the entire microstructure of the Fe-based amorphous alloy include an amorphous microstructure and not include a crystalline microstructure. The absence of a crystalline microstructure can be confirmed by a clear diffraction peak not being observed by X-ray diffraction measurement.

The Fe-based amorphous alloy is obtained by, for example, quenching an alloy molten metal containing Fe and the above-described elements with, for example, a single-roll liquid quenching apparatus to cast the alloy molten metal. The Fe-based amorphous alloy thus manufactured is obtained as a thin strip.

The Fe-based amorphous alloy in a quenched state preferably has magnetic properties including, for example, a saturation magnetic flux density of 1.2 T or more.

The thin pieces 40 including the thin strip of the Fe-based amorphous alloy thus obtained preferably have a thickness of, for example, 10 μm or more and 100 μm or less.

The thin pieces 40 including the thin strip of the Fe-based amorphous alloy may have a surface on which, for example, an oxide layer having a thickness of about 20 nm is formed. This oxide layer is a natural oxide layer formed on the surface of the thin strip when the thin strip of the Fe-based amorphous alloy is manufactured by quenching the alloy molten metal. This oxide layer has an insulating property, and therefore can insulate the thin pieces 40 constituting the laminated core from each other, and can suppress eddy currents to reduce iron loss.

The plurality of thin pieces 40 forming the stator core 21 may be bonded to each other with an adhesion layer 41.

As an adhesive, for example, a thermosetting adhesive may be used that utilizes polymerization bonding. As the composition of the adhesive, compositions that contain (1) an acrylic resin, (2) an epoxy-based resin, (3) an acrylic resin and an epoxy-based resin, and (4) a natural varnish or a synthetic varnish, and the like may be used. The kind of adhesive is not limited to those described above.

In order to obtain sufficient adhesive strength stably, the adhesion layer 41 preferably has a thickness of 1 μm or more. If the thickness of the adhesion layer 41 is more than 100 μm, the adhesive force is saturated. Furthermore, as the adhesion layer 41 becomes thicker, the space factor of the thin pieces 40 decreases, and the magnetic properties such as iron loss deteriorate. Therefore, the thickness of the adhesion layer 41 is more preferably 1 μm or more and 100 μm or less,

and still more preferably 1 μm or more and 10 μm or less. Note that the thickness of the adhesion layer 41 means the average thickness of the adhesion layer 41. The adhesion layer 41 has an insulating property, and therefore can insulate the thin pieces 40 constituting the laminated core from each other, and can suppress eddy currents to reduce iron loss, together with the oxide layer on the surfaces of the thin pieces 40.

The stator core 21 (laminated core) according to the present embodiment is subjected to magnetic field annealing. The stator core 21 subjected to magnetic field annealing significantly improves iron loss. Furthermore, the stator core 21 subjected to magnetic field annealing has anisotropy of the iron loss. That is, the stator core 21 has a property by which iron loss in the magnetic field application direction at the time of annealing is lower than iron loss in the other directions.

In the stator core 21 subjected to magnetic field annealing, the surface of the thin pieces 40 is mottled, and therefore the presence or absence of the discoloration can determine whether the stator core 21 is subjected to magnetic field annealing.

That is, the stator core 21 of the present embodiment is formed by stacking the thin pieces 40 along the thickness direction thereof, and at least one discolored portion is observed on the surface of the thin piece 40 positioned on the outermost surface side of the stator core 21. The discolored portion is formed by magnetic field annealing, and corresponds to what is called a temper color. The discolored portion refers to a portion where the color tone and the hue of the surface are different from those of the portion other than the discolored portion when the surface of the thin piece 40 positioned on the outermost surface of the stator core 21 is observed with the naked eye or with a magnifying glass.

The discolored portion generated by magnetic field annealing can also be confirmed by observing the side surface of the stator core 21. That is, the end surface of the stacked thin pieces 40 appears on the side surface of the stator core 21, and a discolored portion is also formed on the end surface through magnetic field annealing. The discolored portion refers to a portion where the color tone and the hue of the surface are different from those of the portion other than the discolored portion when the side surface of the stator core 21 is observed with the naked eye or with a magnifying glass.

Whether the stator core 21 is subjected to magnetic field annealing can also be determined by confirming the anisotropy of the iron loss.

In the stator core 21 of the present embodiment, the ratio (Wθ/Wr) of the iron loss Wθ in the circumferential direction θ of the laminated body to the iron loss Wr in the radial direction r of the laminated body is less than 1.0. The radial direction r of the laminated body is a direction orthogonal to the circumferential direction θ and the axial direction t (thickness direction of the laminated body). More specifically, in the stator core 21 of the present embodiment, the ratio (Wθ/Wr) of the iron loss Wθ to the iron loss Wr in the core back portion 22 is less than 1.0.

The method of measuring the iron loss ratio (Wθ/Wr) is as follows. First, a test piece S is cut out from the stator core 21. The test piece S has a shape, for example, having a length of 20 mm, a width of 20 mm, and a thickness of 0.5 mm, that is, a square shape in plane view. However, the shape and the size of the test piece S are not limited to those described above. The test piece S may be cut out so as to include the surface of the thin piece. The thickness of the test piece S is along the thickness direction of the thin piece.

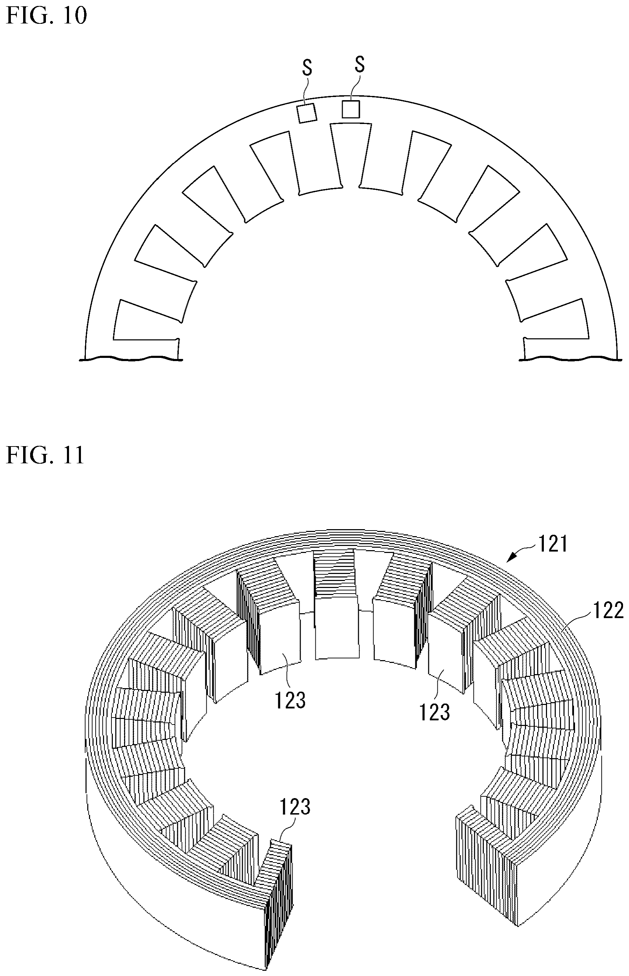

When the test piece S is cut out from the stator core 21, as shown in FIG. 10, the length side or the width side of the test piece S is aligned with the circumferential direction θ of the stator core 21, the thickness direction of the test piece S is aligned with the axial direction t of the stator core 21, and thus the test piece S is cut out. As shown in FIG. 10, the position at which the test piece S is cut out is the core back portion 22 of the stator core 21. For example, the test piece S may be collected from the core back portion 22 in the vicinity of the tooth portions 23, or may be collected from the core back portion 22 between two adjacent tooth portions. The test piece S having a square shape can be used as a test piece for measurement of both the iron loss Wr in the radial direction r and the iron loss Wθ in the circumferential direction θ. However, in a case where only the test piece S having a rectangular shape can be collected, a test piece for measurement of the iron loss Wr in the radial direction r of the laminated body and a test piece for measurement of the iron loss Wθ in the circumferential direction θ are each prepared.

The obtained test piece S is measured using a single strip tester (SST). The iron loss measurement conditions are a magnetic flux density of 1.0 T and a frequency of 50 Hz. The iron loss Wθ in the circumferential direction θ of the laminated body is measured by applying a magnetic field in the side direction corresponding to the circumferential direction θ of the test piece S (circumferential direction θ of the stator core 21). The iron loss Wr in the radial direction r of the laminated body is measured by applying a magnetic field in the side direction corresponding to the radial direction r of the test piece (radial direction r of the stator core 21). The iron loss ratio (Wθ/Wr) is determined from the obtained iron losses Wθ and Wr. The iron loss is measured in accordance with the measurement method described in JIS H 7152: 1996 (Methods of measurement of the magnetic properties of amorphous metals by means of a single sheet tester).

As described above, the stator core 21 according to the present embodiment is subjected to magnetic field annealing. Thus, a magnetic domain structure that effectively reduces iron loss can be provided to the stator core 21. Specifically, in the core back portion 22 between the tooth portions 23, at least one magnetic domain is included that has a magnetic domain width of 0.3 mm or more and 3.0 mm or less and an angle formed by a magnetic domain wall and the circumferential direction θ of less than 10°.

The magnetic domain structure can be controlled by the magnetic field strength applied at the time of magnetic field annealing and the annealing temperature. In particular in a case where the influence of the applied magnetic field is large and the magnetic field is weak, the magnetic domain width is narrow, and the angle formed by the magnetic domain wall and the circumferential direction θ is large. In a case where the magnetic field is strong, the magnetic domain width is wide, and the angle formed by the magnetic domain wall and the circumferential direction θ is small. The present inventors have found that in the case of a laminated core used for a motor, iron loss can be effectively reduced by appropriately controlling the magnetic field strength applied at the time of magnetic field annealing and the annealing temperature so that the magnetic domain structure has a magnetic domain width of 0.3 mm or more and 3.0 mm or less and an angle formed by the magnetic domain wall and the circumferential direction θ of less than 10°.

Furthermore, the present inventors have found that iron loss can be more effectively reduced in the case of a laminated core including many magnetic domains having a magnetic domain width of 0.3 mm or more and 3.0 mm or less and an angle formed by the magnetic domain wall and the circumferential direction θ of less than 10° as described above. Specifically, iron loss can be further reduced in a case where, in the core back portion 22 between the tooth portions 23, the area percentage of the magnetic domain having a magnetic domain width of 0.3 mm or more and 3.0 mm or less and an angle formed by the magnetic domain wall and the tangent of the circumferential direction θ of less than 10° in all of the magnetic domains is 50% or more and 100% or less.

The magnetic domain structure can be observed by the Bitter method, Kerr effect microscopy, Lorentz microscopy, an observation method using a magneto-optical sensor, or the like, and the observation method is not particularly limited. In the present embodiment, the magnetic domain structure is observed by Kerr effect microscopy.

A specific method of observing the magnetic domain structure is as follows.

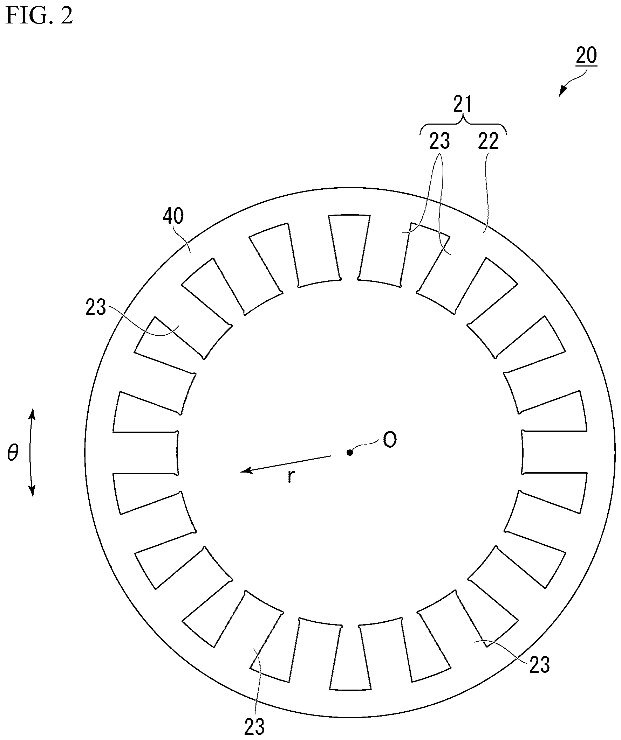

A sample for observation of the magnetic domain structure is collected from the stator core shown in FIG. 2. Specifically, a sample is collected from the core back portion 22 corresponding to 0°, 45°, 90°, and 135° in plane view of the annular stator core of FIG. 2.

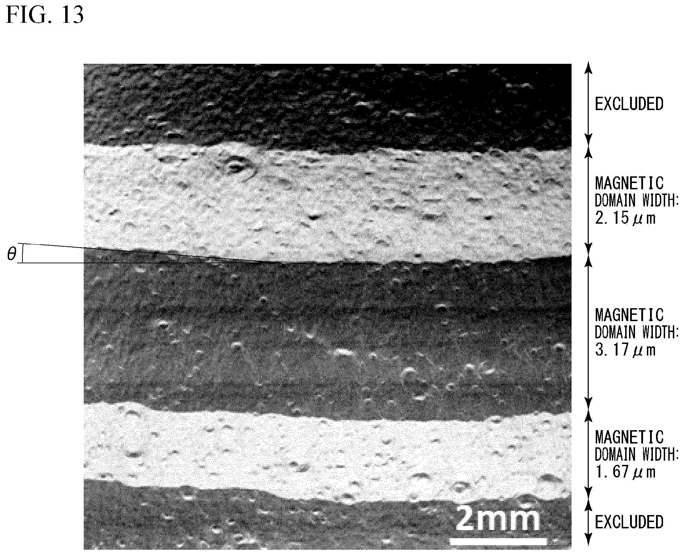

Next, in a region of 10 mm in length × 10 mm in width on the surface of each sample, the magnetic domain structure is observed by Kerr effect microscopy. FIG. 13 is an example of an image obtained by Kerr effect microscopy of a region of 10 mm in length × 10 mm in width on the surface of a sample collected from the stator core of the present embodiment.

The contrast between white and black in FIG. 13 indicates magnetic domains, and each magnetic domain has a curve shape along the circumferential direction θ. The boundary of the contrast between white and black (that is, the boundary between magnetic domains) is a domain wall. The magnetic domain structure of each sample (4 samples in total) corresponding to 0°, 45°, 90°, or 135° of the stator core is observed, and the "magnetic domain width" and the "angle formed by the magnetic domain wall and the tangent of the circumferential direction θ" of each sample are determined. The "magnetic domain width" is the average of three magnetic domain widths (lengths along the radial direction r) randomly selected in each magnetic domain.

Next, the area fraction of the magnetic domain structure having a magnetic domain width of 0.3 mm or more and 3.0 mm or less and an angle formed by the magnetic domain wall and the tangent of the circumferential direction θ of less than 10° is determined. The area fraction (area%) of the magnetic domain structure is defined as the ratio of the sum of the magnetic domain widths of the magnetic domains having a magnetic domain width of 0.3 mm or more and 3.0 mm or less to the sum of the magnetic domain widths of all of the observed magnetic domains. For example, in the case of the image shown in FIG. 13, the sum of the magnetic domain widths of the magnetic domains having a magnetic domain width of 0.3 mm or more and 3.0 mm or less is 2.15 + 1.67 = 3.82 mm, and the sum of the magnetic domain widths of all of the magnetic domains is 6.99 mm, and therefore the area fraction is 3.82 mm/6.99 mm = 54.6%. In the observation image, the magnetic domain width cannot be measured for a magnetic domain in which not both of end portions (both of magnetic domain walls) in the radial direction r can be confirmed, and therefore such a magnetic domain is excluded from the calculation of the "magnetic domain width" and the "area fraction (%) of the magnetic domain structure".

Note that the "area fraction of the magnetic domain structure having a magnetic domain width of 0.3 mm or more and 3.0 mm or less and an angle formed by the magnetic domain wall and the tangent of the circumferential direction θ of less than 10°" in each image obtained in the present embodiment is the average of the area fraction of each image.

In a case where a magnetic field is not applied at the time of annealing, a magnetic domain structure is observed in which the contrast between white and black is unclear. This suggests that the magnetic domain structure has no anisotropy, and effective iron loss reduction cannot be expected. If magnetic field annealing is performed as in FIG. 4 and the like described below, the magnetic field is applied concentrically, but in the tooth portions 23, almost no magnetic field is applied because there is a gap (slot) in the circumferential direction. Therefore, the result in the magnetic domain structure of the tooth portions 23 is similar to the result in the case of annealing without a magnetic field. Thus, the magnetic domains are random (without anisotropy) in a portion other than the core back portion 22 (that is, the tooth portions 23).

Next, a method for manufacturing a laminated core of the present embodiment will be described.

The method for manufacturing a laminated core of the present embodiment includes an magnetic field annealing step of performing annealing, in a magnetic field, of an annular laminated body including a plurality of annular thin pieces including an Fe-based amorphous alloy that are stacked along the thickness direction thereof. The magnetic field annealing step is a step of annealing the laminated body in a temperature range (annealing temperature) of less than the Curie point Tc (°C) of the Fe-based amorphous alloy and (Tc - 100) °C or more in a state where a magnetic field is applied in the circumferential direction θ of the laminated body.

The magnetic field annealing step of the present embodiment may include the following steps. That is, the magnetic field annealing step of the present embodiment may include:

a first step of applying the magnetic field to the laminated body along the circumferential direction θ;

a second step of heating the laminated body to which the magnetic field is applied to the annealing temperature;

a third step of holding the laminated body to which the magnetic field is applied at the annealing temperature for 1 to 8 hours to anneal the laminated body;

a fourth step of cooling the laminated body to which the magnetic field is applied to 200°C or less; and

a fifth step of stopping application of the magnetic field to the laminated body after the fourth step.

Hereinafter, the magnetic field annealing step will be described in detail.

The annular laminated body to be subjected to magnetic field annealing is obtained by, for example, cutting out a plurality of thin pieces from a thin strip including an Fe-based amorphous alloy, and stacking the thin pieces in the thickness direction. The plane view shape of the thin piece cut out from the thin strip is, for example, the plane view shape of the stator core 21 shown in FIG. 2. The method of cutting out the thin piece may be, for example, punching on the thin strip, or wire electric discharge machining on the thin strip. When the plurality of thin pieces are stacked, an adhesion layer may be interposed between the thin pieces. Thus, an annular laminated body is obtained that has a shape of a stator core as shown in FIG. 2.

The annular laminated body may be obtained by, for example, stacking thin strips including an Fe-based amorphous alloy in the thickness direction, and then processing the laminate of the thin strips. When the thin strips are stacked, an adhesion layer may be interposed between the thin strips. The processing method for obtaining a laminated body from the laminate of the thin strips may be, for example, punching or wire electric discharge machining. By such processing, an annular laminated body is obtained that has a shape of a stator core as shown in FIG. 2.

The magnetic field annealing of the laminated body is performed by heating the laminated body in a temperature range of less than the Curie point Tc (°C) of the Fe-based amorphous alloy and (Tc - 100) °C or more while a magnetic field is applied to the laminated body.

At the time of performing magnetic field annealing, the laminated body having a shape of a stator core is heated to the annealing temperature while a magnetic field is applied along the circumferential direction θ, and then held for a certain period of time and thus annealed. That is, a magnetic field is applied to the laminated body along the circumferential direction θ (first step), and then the laminated body to which the magnetic field is applied is heated to the annealing temperature (second step). Next, the laminated body in a state where the magnetic field is applied is held at the annealing temperature for a certain period of time, and thus magnetic field annealing is performed (third step). Details of the method of applying the magnetic field will be described below.

Note that the first step and the second step may be replaced with each other in a temperature range of 200°C or less. That is, as described above, the third step may be performed after heating to the annealing temperature while the magnetic field is applied, or the laminated body may be heated to 200°C, and then in a state where the magnetic field is applied to the laminated body, heated from 200°C to the annealing temperature.

The magnetic field strength for application of the magnetic field to the laminated body is, for example, preferably in a range of 100 to 10000 A/m, and more preferably 400 to 7500 A/m inside the laminated body. The magnetic field strength is still more preferably 400 to 5000 A/m. If the magnetic field strength for application of the magnetic field is within the above range, the iron loss of the stator core can be significantly reduced.

The average heating rate to the annealing temperature may be 1 to 10 °C/min. If the average heating rate to the annealing temperature is more than 10 °C/min, the temperature difference generated in the laminated body is increased. If the temperature difference in the laminated body is increased, the thermal strain due to the temperature difference is also increased, and thus the magnetic properties may deteriorate. Therefore, the average heating rate to the annealing temperature is preferably 10 °C/min or less. If the average heating rate to the annealing temperature is less than 1 °C/min, the heating time is prolonged, and therefore such an average heating rate is not preferable from the viewpoint of productivity.

The laminated body to which the magnetic field is applied is held at the annealing temperature for 1 to 8 hours and thus annealed (third step).

The annealing temperature (holding temperature) is preferably (Tc - 100) (°C) or more and less than Tc (°C).

The annealing temperature may be (Tc - 90) (°C) or more, (Tc - 70) (°C) or more, or (Tc - 60) (°C) or more. The annealing temperature may be (Tc - 20) (°C) or less, or (Tc - 40) (°C) or less. If the annealing temperature is (Tc - 100) (°C) or more and less than Tc (°C), the iron loss of the stator core can be greatly improved, and the anisotropy of the iron loss can be imparted. If the annealing temperature is less than (Tc - 100) (°C), the effect of improving the iron loss is reduced. An annealing temperature of the Curie point Tc (°C) or more is not preferable because at such an annealing temperature, the Fe-based amorphous alloy is crystallized, the magnetic properties significantly deteriorate, and thus the effect of improving the iron loss deteriorates.

Here, examples of a method of increasing the efficiency of the rotating machine include a method of reducing the iron loss and a method of reducing the magnetizing force, which have a trade-off relationship. In the Fe-based amorphous alloy, rising of the BH characteristic is exhibited much better than in an electrical steel sheet. That is, because of a small current (magnetizing force) required to obtain the same magnetic flux density and because of a small copper loss, it is considered that a larger improvement effect can be obtained by reducing the iron loss for improvement in the efficiency of the rotating machine such as a motor. For example, the required microstructure is different between iron loss minimization and magnetizing force minimization according to the purpose, so that the annealing temperature is different. For magnetizing force minimization, partial crystallization is considered to be effective, and for improvement in the iron loss, the microstructure is preferably amorphous without crystallization.

The annealing time (holding time) is preferably in a range of 1 to 8 hours.

If the holding time is more than 8 hours, the annealing time is prolonged, and therefore such an annealing time is not preferable from the viewpoint of productivity. Therefore, the annealing time is preferably 8 hours or less. The annealing time is more preferably 4 hours. If the holding time is less than 1 hour, the effect of fixing magnetization by magnetic field annealing cannot be sufficiently obtained, and a magnetic domain structure effective for reducing the iron loss may not be obtained. Therefore, the annealing time is 1 hour or more.

The annealing time can be determined by the Larson-Miller parameter LMP described below.

The relationship between the annealing temperature and the annealing time is determined by the Larson-Miller parameter LMP described below using the holding temperature T [K] and the holding time t [hr] at the time of magnetic field annealing. The same LMP value indicates the same heat treatment effect. Therefore, for example, in a case where the annealing temperature is changed, the LMP is obtained by the following formula from the annealing temperature and the annealing time before the change, and then the obtained LMP and the predetermined annealing temperature after the change are input to the following formula to predetermine the annealing time after the change.

$$LMP = T(C + \log t)$$

C is a value [hr] determined according to the material.

In a case where the Curie point Tc (°C) of the Fe-based amorphous alloy is unknown, the Curie point needs to be measured and determined. For measurement of the Curie point Tc (°C), a general measurement method is adopted. For example, the Curie point Tc (°C) is identified by extrapolating the asymptotic line of the magnetization change due to temperature change on the low temperature side to the magnetic pole polarization 0 using a vibrating sample magnetometer (VSM).

After the magnetic field annealing, the laminated body to which the magnetic field is applied is cooled to 200°C or less (fourth step), and then the application of the magnetic field to the laminated body is stopped (fifth step). In the fourth step, for example, the laminated body is preferably slowly cooled by natural cooling or the like to a temperature range of 200°C or less.

With the above steps, the laminated body can be subjected to magnetic field annealing, and a laminated core having Wθ/Wr within a desired range can be obtained.

Next, the magnetic field annealing step (method of applying a magnetic field) of performing annealing, in a magnetic field, of the laminated body having the shape of the stator core 21 will be described in detail with reference to FIGS. 4 to 6.

A first method of applying a magnetic field will be described below. First, as shown in FIG. 4, an electrode rod 101 for excitation is inserted into the cavity of a laminated body. The electrode rod 101 for excitation is inserted into the cavity along the axial direction t of the laminated body so as not to contact the laminated body. Next, the electrode rod 101 for excitation is energized to generate an induced magnetic field around the electrode rod 101, and the magnetic field is applied along the circumferential direction θ of the laminated body. The laminated body is annealed in a state where the magnetic field is applied to the inside of the laminated body.

The laminated body having a shape of a stator core includes the annular core back portion 22 and the plurality of tooth portions 23 protruding toward the center axis of the stator core 21. The core back portion 22 is continuous along the circumferential direction θ of the stator core 21. The tooth portions 23 are divided along the circumferential direction θ and are discontinuous because there is a gap (slot) between the tooth portions 23. Therefore, when the magnetic field is applied in the circumferential direction θ of the stator core 21, a magnetic field ψ is intensively applied to the core back portion 22, and almost no magnetic field is applied to the tooth portions 23. Therefore, in the first method shown in FIG. 4, magnetic field annealing is mainly performed on the core back portion 22. In the first method, magnetic field annealing can be completed in a relatively short time.

Next, a second method of applying a magnetic field will be described below. First, as shown in FIG. 5, a winding 102 is wound around a laminated body. The winding 102 is insulated from the laminated body. The winding 102 is wound so as to alternately pass through the cavity of the laminated body and the outer circumferential portion of the laminated body. When the winding 102 is inserted into the cavity of the laminated body, the winding is disposed at a position corresponding to the tip of the tooth portions 23 or between the tooth portions 23. Thus, an excitation coil including the winding 102 is formed.

Next, the excitation coil is energized to apply a magnetic field $\psi$ along the circumferential direction $\theta$ of the laminated body. The laminated body is annealed in a state where the magnetic field is applied.

Also in the case of the second method, the magnetic field $\psi$ is intensively applied to the core back portion 22, and almost no magnetic field is applied to the tooth portions 23. Therefore, in the second method shown in FIG. 5, magnetic field annealing is mainly performed on the core back portion 22 of the laminated body. In the second method, magnetic field annealing can be completed in a relatively short time.

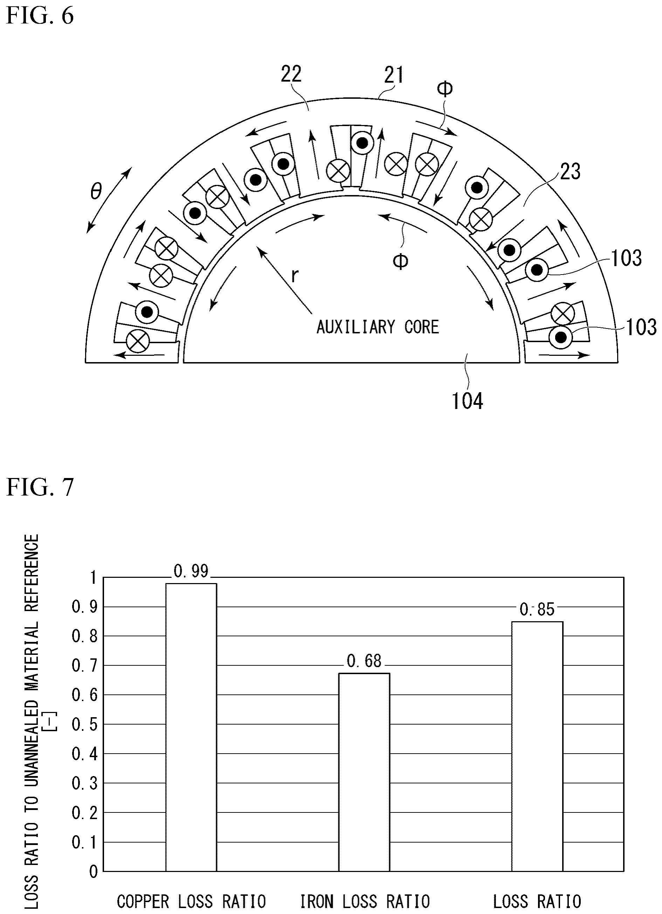

Next, in a third method of applying a magnetic field, as shown in FIG. 6, windings 103 are independently wound around tooth portions 23 of a laminated body respectively, and an auxiliary core 104 including an Ferromagnetic body is inserted into the cavity of the laminated body. The windings 103 are insulated from the laminated body. Since the auxiliary core 104 is inserted into the cavity, a closed magnetic path is formed in the tooth portions 23, the core back portion 22, and the auxiliary core 104 when the windings 103 are energized to generate a magnetic field.

At the time of applying a current to the windings 103, for example, a DC current is caused to flow in a U-phase coil, a V-phase coil, and a W-phase coil, to the tooth portions 23, to be shifted from each other by a central angle of 120 degrees at a current ratio of U-phase coil : V-phase coil : W-phase coil = 2 : -1 : -1. Thus, a magnetic field is applied to the laminated body. The laminated body is annealed in a state where the magnetic field is applied. During annealing, the coil to be energized is sequentially switched. Note that the current ratio among the U-phase coil, the V-phase coil, and the W-phase coil is an example, and some deviation from the above ratio is acceptable. A negative current ratio indicates a direction opposite to the positive direction.

As shown in FIG. 6, the magnetic field $\psi$ applied to the tooth portions 23 is applied in the radial direction r of the laminated body, while the magnetic field $\psi$ applied to the core back portion 22 is applied in the circumferential direction $\theta$ of the laminated body. Therefore, in the third method shown in FIG. 6, magnetic field annealing is performed on both the core back portion 22 and the tooth portions 23. In the third method, the treatment time is longer than in the first and second methods, but both the core back portion 22 and the tooth portions 23 can be subjected to magnetic field annealing.

As described above, the laminated body having the shape of the stator core 21 including the Fe-based amorphous alloy is subjected to magnetic field annealing while a magnetic field is applied along the circumferential direction $\theta$. Thus, in the stator core, the magnetic properties of the core back portion having a larger area than the tooth portions can be further improved, and the iron loss of the entire stator core 21 can be further reduced. As a result of the improvement in the magnetic properties of the core back portion having a larger area than the tooth portions, the magnetic properties of the entire stator core 21 can be improved even if the effect of improving the magnetic properties of the tooth portions is small. Therefore, a rotating machine including such a stator core 21 can exhibit high efficiency in a wide rotation speed range and/or a wide torque range. That is, the rotating machine including such a stator core 21 has a lower iron loss than a rotating machine including a stator core not subjected to the above-described magnetic field annealing, and can be suitably used as a rotating machine for an electric vehicle.

In the rotor shown in FIG. 1, one set of two permanent magnets 32 forms one magnetic pole, but the present embodiment is not limited thereto. For example, one permanent magnet 32 may form one magnetic pole, or three or more permanent magnets 32 may form one magnetic pole.

In the above embodiments, the permanent magnet field type electric motor is described as an example of the rotating machine, but the structure of the rotating machine is not limited thereto as exemplified below, and furthermore, various known structures not exemplified below can also be adopted.

In the above embodiments, the permanent magnet field type electric motor is described as an example of the rotating machine, but the present embodiment is not limited thereto. For example, the rotating machine may be a reluctance type electric motor or an electromagnet field type electric motor (winding field type electric motor).

In the above embodiments, the synchronous electric motor is described as an example of the AC electric motor, but the present embodiment is not limited thereto. For example, the rotating machine may be an induction electric motor.

In the above embodiments, the AC electric motor is described as an example of the rotating machine, but the present embodiment is not limited thereto. For example, the rotating machine may be a DC electric motor.

In the above embodiments, the electric motor is described as an example of the rotating machine, but the present embodiment is not limited thereto. For example, the rotating machine may be a generator.

In the above embodiments, a case is exemplified in which the laminated core according to the present embodiment is applied to a stator core, but the laminated core can also be applied to a rotor core.

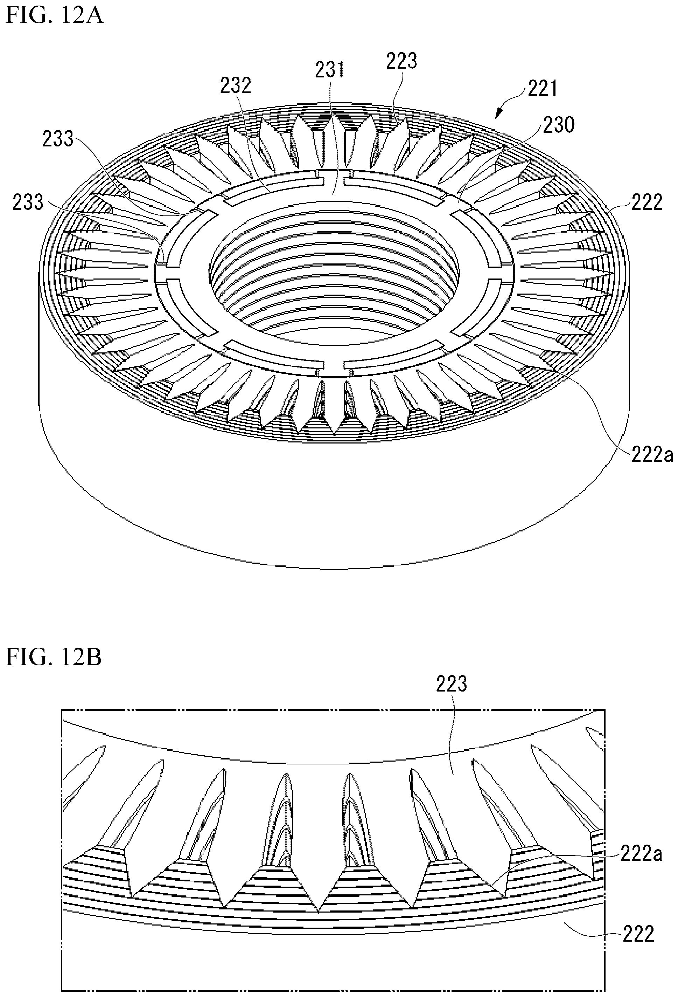

Furthermore, the wound core according to the present embodiment is not limited to that described in the above embodiments, and may be a wound core having a shape shown in FIG. 11 or 12A. The wound core shown in FIG. 11 or 12A is suitably used as a stator core of the rotating machine of the present embodiment.

FIG. 11 is a perspective view of a wound core. Part of a wound core 121 shown in FIG. 11 is removed for the sake of explanation, and the section of the removed portion is illustrated.

The wound core 121 shown in FIG. 11 is obtained, for example, by the following method. First, an Fe-based amorphous alloy thin strip as is, or a thin strip obtained by slitting an Fe-based amorphous alloy thin strip to adjust the width is spirally wound to form a toroidal core. A plurality of recessed portions having a substantially rectangular shape in plane view are provided on the inner circumferential side of the spiral structure along the circumferential direction θ by, for example, electric discharge wire machining, and thus tooth portions 123 are formed. Thus, the wound core 121 is obtained.

That is, the wound core 121 shown in FIG. 11 includes a core back portion 122 and the tooth portions 123. The core back portion 122 is formed by spirally winding the Fe-based amorphous alloy thin strip or the thin strip in which the width is adjusted. Each tooth portion 123 is formed by stacking the Fe-based amorphous alloy thin strips or thin strips in which the width is adjusted. The plurality of tooth portions 123 are disposed at equal intervals in the circumferential direction θ. The plurality of tooth portions 123 are formed in equal shape and size.

Next, the wound core 221 shown in FIGS. 12A and 12B is formed into a toroidal core shape by spirally winding an Fe-based amorphous alloy thin strip as is, or a thin strip obtained by slitting an Fe-based amorphous alloy thin strip to adjust the width, then forming a groove part 222a on the inner circumferential side by, for example, wire electric discharge machining or the like, and attaching a tooth portion 223 to the groove part 222a. The shape of the groove part 222a is not limited to the V-shaped groove as shown in FIGS. 12A and 12B.

FIG. 12A shows a state in which a rotor 230 is inserted into the cavity of the wound core 221. The rotor 230 includes, for example, a rotor core 231 formed into a predetermined shape and including stacked electrical steel sheets, and includes a permanent magnet 232 provided in the rotor core 231. For controlling the flow of the magnetic flux of the permanent magnet 232, gap portions 233 are provided at both ends of the permanent magnet 232 in the longitudinal direction. The rotor core 231 may include an Fe-based amorphous alloy thin strip.

The wound core 221 shown in FIGS. 12A and 12B includes a core back portion 222 and a plurality of tooth portions 223. The core back portion 222 is formed by spirally winding the Fe-based amorphous alloy thin strip or the thin strip in which the width is adjusted. The tooth portions 223 are formed so as to protrude from the inner circumferential surface of the core back portion 222 toward the center of the wound core 221. Each tooth portion 223 is inserted into the groove part 222a provided on the inner circumferential surface of the core back portion 222, and thus attached to the core back portion 222.

Each tooth portion 223 is formed by stacking thin pieces each including the Fe-based amorphous alloy thin strip in the height direction of the wound core 221.

The tooth portion 223 can be manufactured by forming work of the Fe-based amorphous alloy thin strip into a thin piece having the same shape as the plane view shape of the tooth portion 223, and stacking the thin pieces in the height direction of the wound core 221. The forming work performed on the Fe-based amorphous alloy thin strip may be punching or wire electric discharge machining, and is not particularly limited.

Alternatively, the tooth portion 223 can be manufactured by processing the Fe-based amorphous alloy thin strip into a rectangular or circular thin piece, stacking the thin pieces in the thickness direction thereof to form a laminated body, and subjecting the laminated body to forming work. The forming work performed on the laminated body may be punching or wire electric discharge machining, and is not particularly limited.

The plurality of tooth portions 223 thus obtained are attached to the core back portion 222, and thus the wound core 221 is formed. At the time of attaching the tooth portion 223 to the core back portion 222, the tooth portion 223 to which a winding is applied in advance may be attached to the core back portion 222. Thus, the occupancy of the winding can be increased.

The wound cores 121 and 221 shown in FIGS. 11 and 12A can be suitably used as a stator core of the rotating machine of the present embodiment. In particular, in the wound core 221 shown in FIGS. 12A and 12B, the winding can be applied to the tooth portion 223 in advance, so that the occupancy of the winding is increased, and thus the rotational torque of the rotating machine can be improved and the copper loss can be reduced.

In addition, any component in the above-described embodiments can be appropriately replaced with a well-known component without departing from the gist of the present invention, and the above-described modification examples may be appropriately combined with each other.

Examples

(Example 1)

A verification test was performed to confirm the effect of reducing the iron loss of the rotating machine. This verification test was performed by simulation using software. As the software, finite element method electromagnetic field analysis software JMAG manufactured by JSOL CORPORATION was used.

As a sample material, a thin strip including an Fe-based amorphous alloy (chemical composition: $Fe_{78}Si_9B_{12}C_1$ (atom%)) was experimentally produced using a liquid quenching method with a single roll apparatus. The thin strip was an Fe-based amorphous alloy thin strip having a width of 170 mm and a thickness of 25 μm. This Fe-based amorphous alloy had a Curie point Tc of 400°C. This Fe-based amorphous alloy thin strip was used to design the following rotating machine.

· Stator core: outer diameter φ150 mm, inner diameter φ100 mm
· Rotor core ⋯ outer diameter φ98.4 mm
· Laminate thickness (of each of stator core and rotor core) ⋯ 30 mm
· Number of poles and number of slots ⋯ 12 poles and 18 slots
· Winding method ⋯ concentrated winding
· Rotation speed and torque ⋯ 2000 rpm and 12 Nm

In an invention example, a stator core subjected to magnetic field annealing was used, and in a comparative example, a stator core not subjected to magnetic field annealing was used. The magnetic field annealing for the invention example was performed, as shown in FIG. 4, by inserting an excitation electrode into the cavity of the stator core and energizing the excitation electrode under conditions of 340°C for 2 hours in a state where a magnetic field of 800 A/m was applied in the circumferential direction θ of the stator core. The strength of the magnetic field was the strength at the center portion of the core back portion in the radial direction r.

The copper loss and the iron loss of each of the stator core of the invention example and the stator core of the comparative example were obtained by simulation. The ratio of the copper loss of the stator in the invention example to the copper loss of the stator in the comparative example and the ratio of the iron loss of the stator in the invention example to the iron loss of the stator in the comparative example were obtained. FIG. 7 shows the results.

As shown in FIG. 7, with reference to the comparative example, the stator core including the Fe-based amorphous alloy of the invention example had an iron loss of 68% and a total loss of 85% with respect to the comparative example, and thus favorable properties were obtained.

For the stator core of the invention example, the ratio (Wθ/Wr) of the iron loss Wθ in the circumferential direction θ to the iron loss Wr in the radial direction r in the core back portion was measured and confirmed to be less than 1.0. The measurement conditions were the conditions described above.

Furthermore, X-ray diffraction measurement was performed on the stator core subjected to magnetic field annealing of the invention example and the stator core of the comparative example. As a result, a crystalline phase was not generated in the metallographic structure as a clear diffraction peak was not observed in the invention example and the comparative example, and it was confirmed that the entire metallographic structure was amorphous.

(Example 2)

The magnetic field annealing conditions for the Fe-based amorphous alloy thin strip were investigated.

As a sample material, the same thin strip as in Example 1 was used.

The sample material was cut into a length of 10 m, and spirally wound around a quartz bobbin having an outer diameter of 60 mm to produce a wound core. An excitation coil was wound around the wound core, and then the wound core was subjected to magnetic field annealing under conditions of a holding time of 1 hour in a state where a magnetic field of 2000 A/m was applied in the circumferential direction of the wound core. The holding temperature was set to the Curie point Tc (°C), (Tc - 20) (°C), (Tc - 40) (°C), (Tc - 55) (°C), (Tc - 70) (°C), and (Tc - 100) (°C). In addition, a core not subjected to magnetic field annealing was also prepared. This was used as a reference.

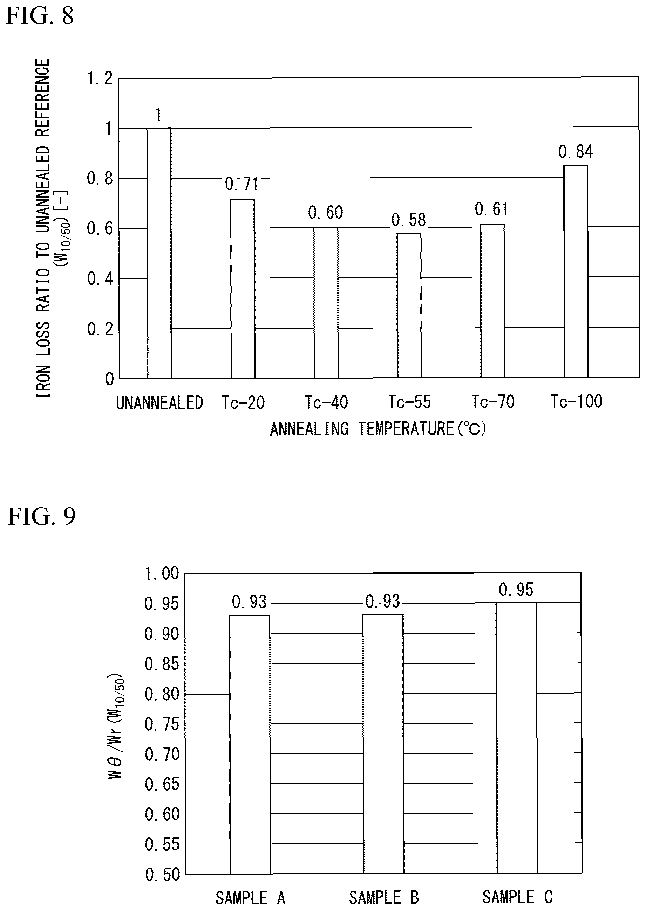

Ten turns of each of a primary coil and a secondary coil were wound around the wound core, and the iron loss $W_{10/50}$ was measured under conditions of a frequency of 50 Hz and a magnetic flux density of 1.0 T using a BH analyzer (SY-8258 manufactured by IWATSU ELECTRIC CO., LTD.). FIG. 8 shows the results.

As shown in FIG. 8, the iron loss ratio to the iron loss of the wound core not subjected to magnetic field annealing shows that the iron loss value was decreased in a range of (Tc - 20) (°C) to (Tc - 100) (°C). Although not illustrated in FIG. 8, in the case of an annealing temperature of Tc (°C), the iron loss ratio was 1.23, and thus the iron loss was increased compared with the case of not performing annealing. More specifically, as shown in FIG. 8, as a result of the magnetic field annealing performed in a state where the magnetic field was applied in the circumferential direction θ of the laminated body, the iron loss value was decreased in a temperature range of (Tc - 20) °C or less to (Tc - 90) °C or more by about 30% compared with the case of not performing annealing, and the iron loss value was decreased in a range of (Tc - 40) °C or less to (Tc - 70) °C or more by about 40% compared with the case of not performing annealing.

Furthermore, X-ray diffraction measurement was performed on the thin strips included in all of the evaluated wound cores. As a result, in all of the thin strips, a crystalline phase was not generated in the metallographic structure as a clear diffraction peak was not observed, and it was confirmed that the entire metallographic structure was amorphous.

(Example 3)

Magnetic measurement was performed under the following conditions to confirm the effect of improving magnetic properties by magnetic field annealing.

As a sample material, Fe-based amorphous alloy thin strips having chemical compositions shown in Table 1 below were prepared. These Fe-based amorphous alloy thin strips were manufactured with a liquid quenching method using a single roll apparatus.

[Table 1]

|  | Chemical component (atm%) residue: impurity | | | | | |
|  | Fe | B | Si | C | P | Al |
| Sample A | 80.60 | 13.00 | 4.00 | 1.00 | 0.90 | 0.50 |
| Sample B | 78.30 | 14.00 | 3.5 | 3.50 | 0.40 | 0.30 |
| Sample C | 81.60 | 14.00 | 2.5 | 1.00 | 0.40 | 0.50 |

Each of the thin strips of samples A to C was cut into a square having a side of 55 mm, and the iron loss (W/kg) was measured in accordance with the measurement method described in JIS H 7152: 1996 (Methods of measurement of the magnetic properties of amorphous metals by means of a single sheet tester). In the measurement, magnetic field annealing was performed under conditions of 800 A/m, 340°C, and 1 hour. Note that the applied magnetic field strength is the field intensity in the sample.

The iron loss measurement conditions were a magnetic flux density of 1.0 T and a frequency of 50 Hz. In the magnetic field annealing, the direction in which the magnetic field was applied was regarded as the circumferential direction $\theta$, and the direction, other than the thickness direction of the thin strip, orthogonal to the circumferential direction $\theta$ was regarded as the radial direction r. Thus, the iron losses $W\theta$ and $Wr$ at the time of excitation in the respective directions were measured. As a result of comparison of the ratio of $W\theta$ to $Wr$ ($W\theta/Wr$), the values of all of the samples A to C were smaller than 1.0 as shown in FIG. 9. This indicates that the iron loss $W\theta$ in the magnetic field application direction is smaller than the iron loss $Wr$ orthogonal to the magnetic field application direction.

As a result of X-ray diffraction measurement performed on the thin strips of the samples A to C after the annealing in the magnetic field, a crystalline phase was not generated in the metallographic structure in all of the thin strips as a clear diffraction peak was not observed, and it was confirmed that the entire metallographic structure was amorphous.

INDUSTRIAL APPLICABILITY

The laminated core of the present disclosure has further reduced iron loss, and therefore has high industrial applicability.

REFERENCE SIGNS LIST

10 Rotating machine
20 Stator
21 Stator core (Laminated core)
22 Core back portion
23 Tooth portion
30 Rotor
31 Rotor core
32 Permanent magnet
33 Through-hole
40 Thin piece (Fe-based amorphous alloy)
41 Adhesion layer
50 Case
60 Rotary shaft
101 Electrode rod
102 Winding

103 Winding
104 Auxiliary core
O Central axis
r Radial direction
t Axial direction
θ Circumferential direction
φ Magnetic field

**Claims**

1. A laminated core comprising a plurality of annular thin pieces including an Fe-based amorphous alloy having an amorphous microstructure, the plurality of annular thin pieces being stacked in a thickness direction of the plurality of annular thin pieces,
   wherein a ratio (Wθ/Wr) of an iron loss Wθ in a circumferential direction θ of the plurality of annular thin pieces to an iron loss Wr in a radial direction orthogonal to the circumferential direction θ and the thickness direction is less than 1.0.

2. The laminated core according to claim 1,

   wherein the laminated core includes an annular core back portion and a plurality of tooth portions that protrude from the annular core back portion in the radial direction and are disposed at an interval in the circumferential direction θ,
   wherein a ratio (Wθ/Wr) of the iron loss Wθ to the iron loss Wr in the annular core back portion is less than 1.0.

3. The laminated core according to claim 1, wherein the entire microstructure of the Fe-based amorphous alloy includes an amorphous microstructure and does not include a crystalline microstructure.

4. The laminated core according to claim 1, wherein each of the plurality of annular thin pieces has a surface on which an oxide layer is formed.

5. The laminated core according to claim 1, further comprising an adhesion layer between the plurality of annular thin pieces.

6. The laminated core according to claim 2, wherein the annular core back portion between adjacent tooth portions among the plurality of tooth portions has at least one magnetic domain having a magnetic domain width of 0.3 mm or more and 3.0 mm or less, and an angle being formed by a magnetic domain wall and a tangent of the circumferential direction θ of less than 10°.

7. The laminated core according to claim 2, wherein the annular core back portion between adjacent tooth portions among the plurality of tooth portions has an area percentage of a magnetic domain of 50% or more, the magnetic domain having a magnetic domain width of 0.3 mm or more and 3.0 mm or less and an angle of less than 10°, the angle being formed by a magnetic domain wall and a tangent of the circumferential direction θ.

8. A rotating machine comprising a stator core including the laminated core according to any one of claims 1 to 7.

9. A method for manufacturing a laminated core, the method comprising:

   an magnetic field annealing step of performing annealing of a laminated body in a magnetic field, the laminated body including a plurality of annular thin pieces including an Fe-based amorphous alloy, the plurality of annular thin pieces being stacked along a thickness direction of the plurality of annular thin pieces,
   wherein the annealing is performed at an annealing temperature of less than a Curie point Tc (°C) of the Fe-based amorphous alloy and (Tc - 100) °C or more in a state where a magnetic field is applied in a circumferential direction θ of the laminated body.

10. The method for manufacturing a laminated core according to claim 9, wherein the annealing temperature in the magnetic field annealing step is in a range of (Tc - 20) °C or less and (Tc - 90) °C or more.

11. The method for manufacturing a laminated core according to claim 9, wherein the annealing temperature in the magnetic field annealing step is in a range of (Tc - 40) °C or less and (Tc - 70) °C or more.

12. The method for manufacturing a laminated core according to claim 9, wherein a magnetic field strength for application of the magnetic field to the laminated body is in a range of 100 to 10000 A/m inside the laminated body.

13. The method for manufacturing a laminated core according to claim 9, wherein a magnetic field strength for application of the magnetic field to the laminated body is in a range of 400 to 7500 A/m inside the laminated body.

14. The method for manufacturing a laminated core according to claim 9, wherein the magnetic field annealing step includes:

a first step of applying the magnetic field to the laminated body along the circumferential direction $\theta$;
a second step of heating the laminated body to which the magnetic field is applied to the annealing temperature;
a third step of holding the laminated body to which the magnetic field is applied at the annealing temperature for 1 to 8 hours to anneal the laminated body;
a fourth step of cooling the laminated body to which the magnetic field is applied to 200°C or less; and
a fifth step of stopping application of the magnetic field to the laminated body after the fourth step.

15. The method for manufacturing a laminated core according to claim 14, wherein
in the second step, an average heating rate is 1 to 10 °C/min.

FIG. 1

FIG. 2

FIG. 3

FIG. 4

FIG. 5

FIG. 6

FIG. 7

FIG. 8

FIG. 9

## FIG. 10

## FIG. 11

## FIG. 12A

## FIG. 12B

FIG. 13

## INTERNATIONAL SEARCH REPORT

| International application No. |
|---|
| **PCT/JP2024/008836** |

| A. | CLASSIFICATION OF SUBJECT MATTER |
|---|---|

*H02K 1/18*(2006.01)i; *H02K 1/02*(2006.01)i; *H02K 15/02*(2006.01)i
FI:   H02K1/18 B; H02K1/02 B; H02K15/02 F

According to International Patent Classification (IPC) or to both national classification and IPC

| B. | FIELDS SEARCHED |
|---|---|

Minimum documentation searched (classification system followed by classification symbols)

H02K1/18; H02K1/02; H02K15/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 62-167840 A (MITSUBISHI ELECTRIC CORPORATION) 24 July 1987 (1987-07-24) claim 1, p. 3, lower right column, line 10 to p. 4, upper left column, line 18, p. 4, lower left column, line 16 to lower right column, line 13, fig. 1-3 | 1-15 |
| P, A | JP 2023-107731 A (NIPPON STEEL CORPORATION) 03 August 2023 (2023-08-03) | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

International application No.

**PCT/JP2024/008836**

| Patent document cited in search report | | | Publication date (day/month/year) | Patent family member(s) | | | Publication date (day/month/year) |
|---|---|---|---|---|---|---|---|
| JP | 62-167840 | A | 24 July 1987 | (Family: none) | | | |
| JP | 2023-107731 | A | 03 August 2023 | WO | 2022/244819 | A1 | |
| | | | | KR | 10-2023-0169307 | A | |
| | | | | CN | 117321239 | A | |
| | | | | CA | 3217383 | A1 | |
| | | | | AU | 2022278841 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023040773 A
- WO 2020044745 A
- JP 6656429 B
- JP H521774 A
- JP H310052 A